# EUROPÄISCHE PATENTSCHRIFT

(11) **EP 3 618 933 B1**
(45) Veröffentlichungstag und Bekanntmachung des Hinweises auf die Patenterteilung: **30.04.2025**
(21) Anmeldenummer: 18723768.0
(22) Anmeldetag: 02.05.2018
(51) Int. Cl.: A62C 35/02, A62C 35/68

(54) **ANSCHLUSSADAPTER FÜR LÖSCHMITTELBEHÄLTER AN FEUERLÖSCHANLAGEN**
CONNECTION ADAPTER FOR A CONTAINER FOR A FIRE-EXTINGUISHING AGENT PERTAINING TO A FIRE-EXTINGUISHING SYSTEM
ADAPTATEUR DE RACCORDEMENT POUR RÉSERVOIR D'AGENT D'EXTINCTION SUR DES INSTALLATIONS D'EXTINCTION DE FEU

(30) Priorität: 02.05.2017 DE 102017109366
(43) Veröffentlichungstag der Anmeldung: 11.03.2020
(73) Patentinhaber: Minimax GmbH, 23843 Bad Oldesloe (DE)
(72) Erfinder: FELBERG, Jan, 23840 Bad Oldesloe (DE); HABITZL, Wolfgang, 23840 Bad Oldesloe (DE)
(74) Vertreter: Eisenführ Speiser
(86) Internationale Anmeldenummer: PCT/EP2018/061152
(87) Internationale Veröffentlichungsnummer: WO 2018/202682

(56) Entgegenhaltungen:
- EP-A1- 2 835 567
- WO-A1-2011/031722
- CN-A- 104 728 546
- CN-Y- 2 887 345
- DE-B- 1 039 798
- KR-Y1- 200 460 709
- US-A1- 2008 000 649

## Beschreibung

Die vorliegende Erfindung betrifft einen Adapter zum fluidleitenden Verbinden eines Löschmittelbehälters mit einem Rohrleitungsanschluss einer Feuerlöschanlage, mit einem ersten Anschluss, der dazu eingerichtet ist, an einem korrespondierend ausgebildeten Anschluss des Löschmittelbehälters angeschlossen zu werden, und einem zweiten Anschluss, der dazu eingerichtet ist, an einen korrespondierenden Rohrleitungsanschluss angeschlossen zu werden.

Das Anschließen des Löschmittelbehälters an das Rohrleitungsnetz einer Feuerlöschanlage ist in der Praxis in der Vergangenheit immer wieder mit konstruktiven Herausforderungen konfrontiert gewesen. Am häufigsten tritt ein Anpassungsbedarf auf, wenn ein Löschmittelbehälter für eine Feuerlöschanlage erst nachträglich angeliefert und installiert wird, nachdem das Rohrleitungsnetz bereits fest am Objekt installiert wurde.

Man hat sich in der Vergangenheit damit beholfen, das Rohrleitungsnetz konstruktiv nach dem Abstellen des Löschmittelbehälters anzupassen, was eine aufwendige zusätzliche Verrohrung und weitere Armaturen erforderte. Der hierzu notwendige Kosten- und Konstruktionsaufwand wurde als nachteilig angesehen.

Des Weiteren wurde versucht, die Position des Löschmittelbehälters durch Unterlegen von Distanzstücken, beispielsweise Holzkeilen etc., an das bestehende Rohrleitungsnetz anzupassen, was einen hohen Montage- und Zeitaufwand nach sich zog, der ebenfalls als nachteilig angesehen wird.

In einer weiteren Behelfslösung wurde zwischen Löschmittelbehälter und Rohrleitungsnetz ein Adapter in Form eines flexiblen Schlauchs verwendet. Dieser ermöglicht zwar einen Winkelausgleich zusätzlich zu einem (begrenzten) Höhenausgleich zwischen dem Rohrleitungsanschluss einerseits und dem Anschluss des Löschmittelbehälters andererseits, ist aber teuer in der Anschaffung und weist nur eine begrenzte Haltbarkeit (in der Regel zehn Jahre) auf.

CN 2 887 345 Y, KR 200 460 709 Y1, WO 2011/031722 A1 und EP 2 835 567 A1 zeigen verschiedene Ausführungen herkömmlicher Adapter zum fluidleitenden Verbinden eines Löschmittelbehälters mit einem Rohrleitungsanschluss einer Feuerlöschanlage. Aus CN 104 728 546 A ist ein flexibler Adapter zum fluidleitenden Verbinden von Anschlüssen bekannt. DE 10 39 798 offenbart eine gelenkige Rohrverbindung.

Andere Lösungen verwenden ein Verbindungsstück wo zwei zylindrische Rohre ineinander verschiebbar angeordnet sind. Diese Lösung hat jedoch den Nachteil das sie bei Druck Beaufschlagung als hydraulischer Hubkolben wirkt und Kräfte bis zu einigen Tonnen auf das Rohrleitungsnetznetz und dessen Befestigungen wirken, was in der Regel zu Beschädigungen bzw. Versagen an den Rohrleitungsnetzbefestigungen führt und teure Instandsetzungsarbeiten nach sich zieht.

Demnach lag der Erfindung die Aufgabe zugrunde, eine Anschlussmöglichkeit für Löschmittelbehälter an Rohrleitungsnetze von Feuerlöschanlagen zu schaffen, die die vorstehend erläuterten Nachteile möglichst weitgehend überwindet. Insbesondere lag der Erfindung die Aufgabe zugrunde, einen Adapter anzugeben, der bei reduziertem Montageaufwand einen Winkel- und Längenausgleich zwischen dem Löschmittelbehälter und dem Rohrleitungsnetz bei langer Haltbarkeit ermöglicht.

Die Erfindung löst die ihr zugrundeliegende Aufgabe, indem sie einen Adapter nach Anspruch 1 vorschlägt. Der Adapter weist vorzugsweise einen starren, längenveränderlichen Rohrverbinder auf, der sich entlang einer Längsachse erstreckt, wobei der erste Anschluss und der zweite Anschluss jeweils gelenkig an dem Rohrverbinder befestigt sind. Der Vorteil der Kombination eines in sich starren Rohrverbinders mit zwei, vorzugsweise endseitig an dem Rohrverbinder angeschlossenen gelenkigen Anschlüssen wird darin gesehen, dass die Ausgleichsmöglichkeit betreffend den Winkelversatz zwischen Löschmittelbehälter und Rohrleitungsanschluss kompensiert werden kann, ohne die Nachteile, insbesondere die geringe Haltbarkeit, eines flexiblen Schlauchs in Kauf nehmen zu müssen. Es sind keine zusätzlichen Armaturen oder Ausricht-Arbeiten notwendig, sofern der Anschluss des Löschmittelbehälters in etwa auf der richtigen Höhe liegt.

In einer vorteilhaften Weiterbildung weist der Rohrverbinder ein erstes Verbindungsrohr und ein zweites Verbindungsrohr auf, die zueinander in Richtung der Längsachse bewegbar sind. Durch die Längenverstellbarkeit der beiden Verbindungsrohre zueinander wird zudem die Möglichkeit der Kompensation von unerwarteten Höhenunterschieden gewährleistet.

In einer bevorzugten Ausführungsform sind das erste und zweite Verbindungsrohr miteinander verschraubt. Besonders bevorzugt sind das erste und zweite Verbindungsrohr hierbei mittels eines Trapezgewindes miteinander verschraubt. Ein besonderer Vorteil des Trapezgewindes ist die sehr stabile Ausgestaltung der Flanken, die eine hohe Kraftaufnahme ermöglichen wodurch bei Druckbeaufschlagung keine Kräfte auf die Befestigung des Rohrleitungsnetzes entstehen. Des Weiteren ist eine sehr flexible Auswahl der Gewindesteigung des Trapezgewindes möglich. Beispielsweise durch Auswahl einer hohen Steigung können bereits mit wenigen Umdrehungen die relevanten Höhenunterschiede durch Längeneinstellung des Rohrverbinders zeit- und kosteneffizient ausgeglichen werden.

Vorzugsweise weist das erste Verbindungsrohr ein Außengewinde auf, und das zweite Verbindungsrohr weist ein Innengewinde auf. Die beiden Gewinde stehen miteinander in Eingriff, um eine Längenverstellbarkeit des Rohrverbinders in Richtung der Längsachse zu gewährleisten. Das Innengewinde ist vorzugsweise an einem Gewindeeinsatz ausgeformt, der an dem zweiten Verbindungsrohr befestigt ist, beispielsweise mittels Verschrauben, insbesondere gegensinnig zu der Gewindesteigung des Trapezgewindes, oder mittels Ein- oder Aufpressen in bzw. auf das zweite Verbindungsrohr. Hierdurch wird auch ermöglicht, den Gewindeeinsatz in einem von dem Verbindungsrohr verschiedenen Material auszuführen, beispielsweise einem relativ zum Rohr duktilen Material, während das Rohr selbst aus einem im Vergleich zum Gewindeeinsatz steiferen Material ausgebildet ist.

Der Rohrverbinder ist mittels der Verbindungsrohre vorzugsweise über einen Längenbereich von 20 mm oder mehr, besonders bevorzugt 50 mm oder mehr, längenveränderlich. In einer besonders bevorzugten Ausgestaltung ist der Rohrverbinder in einem Bereich von 55 mm bis 105 mm in Richtung der Längsachse längenveränderlich. Während grundsätzlich die Größe des Einstellbereichs ausschließlich von der Länge der einzelnen Rohre des Rohrverbinders und der Länge des Gewindeabschnitts in Richtung der Längsachse abhängt, hat sich herausgestellt, dass in der Praxis ein Einstellbereich in der Größenordnung zwischen 55 und 105 mm einen optimalen Kompromiss aus Kompaktheit des Bauteils und Vielfältigkeit des Einsatzes bedingt. Es können die Fertigungstoleranzen der Systemkomponenten zueinander ausgeglichen werden, und zusätzlich steht ausreichend Verstellweg für die Montage am Rohrleitungsanschluss der Feuerlöschanlage zur Verfügung, wo zusätzlich auch das Löschmittelventil angebracht sein kann. Hierbei findet Berücksichtigung, dass der Anschluss des Rohrverbinders in das Löschmittelventil einschraubbar ist und die notwendige "Schraubhöhe" durch den Verstellweg des Rohrverbinders ebenfalls kompensiert werden kann.

Der erste und/oder zweite Anschluss des Rohrverbinders sind erfindungsgemäß jeweils mittels eines Kalottengelenks mit dem Rohrverbinder gekoppelt. Das Kalottengelenk weist vorzugsweise einen durchgehenden Strömungskanal zum Durchleiten von Fluid auf, so dass druckbeaufschlagtes Löschmittel von dem Löschmittelbehälter durch den ersten Anschluss in den Rohrverbinder eintreten kann und durch den zweiten Anschluss aus dem Adapter aus- und in den Rohrleitungsanschluss der Feuerlöschanlage eintreten kann bzw. in ein dort noch vorgeschaltetes Löschmittelventil, wie beispielsweise einen Rückflussverhinderer.

Erfindungsgemäß weist das Kalottengelenk ein Gehäuse mit einer ersten Gleitfläche auf und ein Wankstück mit einer zweiten Gleitfläche, wobei die ersten und zweiten Gleitflächen aneinander abgleiten und derart geformt sind, dass das Wankstück in dem Gehäuse sphärisch beweglich geführt ist. Unter einer sphärisch beweglich geführten Bewegung wird verstanden, dass das Wankstück drei Rotationsfreiheitsgrade hat. Andere Beispiele für sphärisch beweglich geführte Gelenkverbindungen sind Kardangelenke oder Kugelgelenke. Das Wankstück kann relativ zum Gehäuse des Kalottengelenks eine Wank-, d.h. Roll-, Gier- und Kippbewegung (roll, pitch and yaw, RPY) vollführen.

Die Anschlüsse des Rohrverbinders sind vorzugsweise an dem jeweiligen Wankstück oder dem Gehäuse des Kalottengelenks ausgebildet, so dass die Wankstücke bzw. Gehäuse relativ zu der Längsachse des Rohrverbinders innerhalb eines vordefinierten Kegelvolumens frei beweglich sind.

In einer bevorzugten Ausgestaltung des Kalottengelenks ist mindestens eine der ersten und zweiten Gleitflächen abschnittsweise oder vollständig teilkugelförmig ausgebildet.

Weiter vorzugsweise weist das Kalottengelenk, etwa an einem in das Gehäuse eingelassenen Einsatz, eine dritte Gleitfläche auf, die gegenüber der ersten Gleitfläche angeordnet ist, und das Wankstück weist ferner eine vierte Gleitfläche auf, die gegenüber der dritten Gleitfläche angeordnet ist, wobei die dritten und vierten Gleitflächen aneinander abgleiten und vorzugsweise derart geformt sind, dass das Wankstück in dem Gehäuse sphärisch beweglich geführt ist, wobei weiter vorzugsweise mindestens eine der dritten und vierten Gleitflächen zumindest abschnittsweise teilkugelförmig ausgebildet ist. Das Wankstück wird also zwischen der ersten und dritten Gleitfläche geführt, wodurch Translationsfreiheitsgrade eliminiert werden.

In einer bevorzugten weiteren Ausgestaltung zwischen der ersten und zweiten, und/oder optional der dritten und vierten Gleitfläche ein Dichtelement vorgesehen, welches das Kalottengelenk gegen Fluidaustritt nach außen abdichtet.

In einer weiteren bevorzugten Ausführungsform weist das Kalottengelenk einen Verstellkegel mit einem Öffnungswinkel von 5° oder mehr auf. Vorzugsweise liegt der Öffnungswinkel in einem Bereich von 5° bis 20°. Ein Öffnungswinkel von 5° definiert einen maximalen Winkelausgleich von 2,5°, wenn beide Anschlüsse des Rohrverbinders parallel, beispielsweise vertikal, ausgerichtet sind. Ein Öffnungswinkel von 10° definiert einen maximal möglichen Winkelausgleich von 5° bei den gleichen Voraussetzungen, und ein Öffnungskegel von 20° würde einen Winkelausgleich von bis zu 10° unter den gleichen Voraussetzungen ermöglichen. Der bevorzugte Bereich stellt einen optimalen Kompromiss aus Bauhöhe des Kalottengelenks und Einsatzbereich des Adapters in der Praxis dar.

Erfindungsgemäß weist das Kalottengelenk ein Vorspannelement auf, welches mit dem Wankstück einerseits und dem Gehäuse andererseits gekoppelt ist und vorzugsweise dahingehend auf das Wankstück einwirkt, dieses in eine Mittelstellung zurückzustellen, in welcher der an dem Wankstück vorgesehene Anschluss in Richtung der Längsachse des Rohrverbinders ausgerichtet ist. Wenn das Vorspannelement in Richtung der ersten und zweiten Gleitflächen vorgespannt ist, werden die ersten und zweiten Gleitflächen unabhängig von der Winkelstellung des Kalottengelenks fluiddicht aneinander gedrückt. Ferner ist das Vorspannelement dazu eingerichtet, Vibrationen aufzunehmen und, vorzugsweise gedämpft, abzufedern. Hierdurch wird verhindert, dass sich der Anschlussadapter ungewollt löst oder Ermüdungsbruch erleidet.

Das Vorspannelement weist vorzugsweise einen ersten und zweiten endseitigen Stirnring und ein oder mehrere wellenförmig umlaufend zwischen den beiden Stirnringen angeordnete Federelemente auf. Optional weist die Wellenfeder einen oder mehrere Zwischenringe zwischen den wellenförmigen Federelementen auf. Das Vorspannelement besteht aus einem elastisch verformbaren Werkstoff, beispielsweise Federstahl oder einem elastomeren Kunststoff, und hat den Vorteil, dass es aufgrund der Wellenschichtung der Federelemente extrem wenig axialen Bauraum in Anspruch nimmt und zeitgleich sehr verschleißfest ist. Wenn die Wellenfeder in das Gehäuse zwischen die erste und dritte Gleitfläche eingesetzt wird, wird bei einer Winkelauslenkung des Wankstücks relativ zum Gehäuse immer nur eine Seite der Feder komprimiert, während die andere Seite zum Ausgleich expandieren kann.

In einer weiteren bevorzugten Ausführungsform ist eines der beiden Rohre des Rohrverbinders ein innenliegendes Rohr, und das andere der beiden Rohre ist ein außenliegendes Rohr, wobei das innenliegende Rohr einen vorzugsweise stirnseitig angeordneten Gleitabschnitt aufweist, der gleitbeweglich an einer Innenwandung des außenliegenden Rohres anliegt. Der Gleitabschnitt stützt das innenliegende Rohr gegen das außenliegende Rohr ab und verhindert ein Verkanten der beiden Rohre aneinander.

Weiter vorzugsweise ist zwischen dem innenliegenden Rohr und dem außenliegenden Rohr, besonders bevorzugt an dem Gleitabschnitt, ein Dichtelement zum Abdichten des Rohrverbinders gegen Fluidaustritt angeordnet. Der Gleitabschnitt ist vorzugsweise auf das innenliegende Rohr aufgeschraubt oder aufgepresst.

Die vorstehend beschriebene Ausführungsform eines Adapters mit Vorspannelement ist zugleich ein separater Erfindungsaspekt. In jenem Aspekt betrifft die Erfindung einen Adapter der eingangs bezeichneten Art, der die eingangs bezeichnete Aufgabe löst, indem sie einen Adapter zum fluidleitenden Verbinden eines Löschmittelbehälters mit einem Rohrleitungsanschluss einer Feuerlöschanlage vorschlägt, mit einem ersten Anschluss, der dazu eingerichtet ist, an einen korrespondierend ausgebildeten Anschluss des Löschmittelbehälters angeschlossen zu werden, und einem zweiten Anschluss, der dazu eingerichtet ist, an einen korrespondierenden Rohrleitungsanschluss angeschlossen zu werden, wobei der erste und/oder zweite Anschluss jeweils mittels eines Kalottengelenks mit dem Rohrverbinder gekoppelt sind, wobei das Kalottengelenk ein Gehäuse mit einer ersten Gleitfläche aufweist, und ein Wankstück mit einer zweiten Gleitfläche, wobei die ersten und zweiten Gleitflächen aneinander abgleiten und derart geformt sind, dass das Wankstück in dem Gehäuse sphärisch beweglich geführt ist, und wobei das Kalottengelenk ein Vorspannelement aufweist, welches mit dem Wankstück einerseits und dem Gehäuse andererseits gekoppelt ist, und derart in Richtung der ersten und zweiten Gleitflächen vorgespannt ist, dass die ersten und zweiten Gleitflächen fluiddicht aneinander gedrückt werden. Die Erfindung macht sich die oben erläuterten Vorteile zunutze, weswegen diesbezüglich auf die obigen Ausführungen verwiesen wird. Die Erfindung hat vorzugsweise eine, mehrere oder sämtliche der vorstehend und nachfolgend beschriebenen bevorzugten Ausführungsformen des erfindungsgemäßen Adapters.

Die Erfindung ist vorstehend unter Bezugnahme auf den erfindungsgemäßen Adapter in einem ersten und zweiten Aspekt beschrieben worden. In einem weiteren Aspekt betrifft die Erfindung ferner eine Feuerlöschanlage mit einem Löschmittelbehälter mit einem Anschluss und einem Rohrleitungsanschluss, wobei der Anschluss des Löschmittelbehälters und der Rohrleitungsanschluss voneinander beabstandet sind.

Die Erfindung löst die ihr zugrundeliegende Aufgabe bei einer vorbezeichneten Feuerlöschanlage, indem ein Adapter vorgesehen ist, der den Löschmittelbehälter mit dem Rohrleitungsanschluss fluidleitend verbindet, wobei der Adapter vorzugsweise nach einer der vorstehend beschriebenen bevorzugten Ausführungsformen ausgebildet ist. Insbesondere weist der Adapter einen ersten Anschluss auf, der mit dem Anschluss des Löschmittelbehälters korrespondiert und daran angeschlossen ist, einen zweiten Anschluss, der mit dem Rohrleitungsanschluss korrespondiert und daran angeschlossen ist und einen starren, längenveränderlichen Rohrverbinder, der sich entlang einer Längsachse erstreckt, wobei der erste Anschluss und der zweite Anschluss jeweils gelenkig an dem Rohrverbinder befestigt sind. Hinsichtlich der Vorteile und bevorzugten Ausführungsformen der erfindungsgemäßen Feuerlöschanlage wird auf die vorstehenden Erläuterungen zum erfindungsgemäßen Adapter verwiesen.

In einem weiteren Aspekt betrifft die Erfindung eine Verwendung eines Adapters zum fluidleitenden Verbinden eines Löschmittelbehälters an einem Rohrleitungsanschluss einer Feuerlöschanlage. Erfindungsgemäß ist der Adapter nach einer der vorstehend beschriebenen bevorzugten Ausführungsformen ausgebildet.

Im Folgenden wird die Erfindung anhand eines bevorzugten Ausführungsbeispiels unter Bezugnahme auf die beigefügten Figuren näher erläutert. Hierbei zeigen:
- Figur 1: eine schematische Seitenansicht einer Feuerlöschanlage gemäß einem bevorzugten Ausführungsbeispiel in einer Explosionsansicht,
- Figuren 2a,b: schematische Seiten- und Querschnittsansichten eines Adapters für die Feuerlöschanlage gemäß Figur 1,
- Figur 3: eine schematische Detailansicht eines Adapters für die Feuerlöschanlage gemäß Figur 1 in einem weiteren Ausführungsbeispiel, und
- Figur 4: ein Vorspannelement für den Adapter gemäß Figur 3 in einer schematischen räumlichen Ansicht.

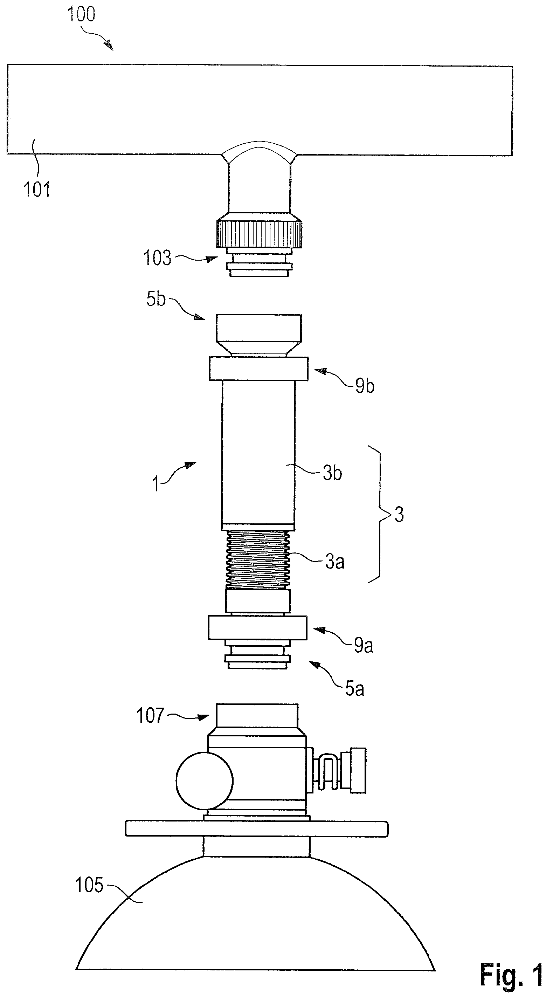

In Figur 1 ist eine Feuerlöschanlage 100 dargestellt. Die Feuerlöschanlage 100 weist ein Rohrleitungsnetz 101 auf, das einen Rohrleitungsanschluss 103 zum Zuführen von Löschmittel aufweist. Die Löschanlage 100 weist ferner einen Löschmittelbehälter 105 auf, der vorzugsweise druckbeaufschlagtes Löschmittel vorrätig hält und einen Anschluss 107 aufweist, über den Löschmittel für das Rohrleitungsnetz 101 zur Verfügung gestellt werden kann. Der Anschluss 107 des Löschmittelbehälters 105 und der Rohrleitungsanschluss 103 des Rohrleitungssystems 101 sind mittels eines Adapters 1 gemäß der vorliegenden Erfindung fluidleitend verbunden. Der Adapter 1 weist einen Rohrverbinder 3 auf, der ein erstes Rohr 3a und ein zweite Rohr 3b aufweist.

Der Adapter 1 weist einen ersten Anschluss 5a auf, der dazu eingerichtet ist, mit dem Anschluss 107 des Löschmittelbehälters 105 gekoppelt zu werden, beispielsweise mittels eines Steckverbinders. Ferner weist der Adapter 1 einen zweiten Anschluss 5b auf, der dazu eingerichtet ist, mit dem Rohrleitungsanschluss 103 gekoppelt zu werden, beispielsweise ebenfalls mittels eines Steckverbinders.

Weitere Details zum Aufbau des Adapters 1 ergeben sich aus den folgenden Figuren.

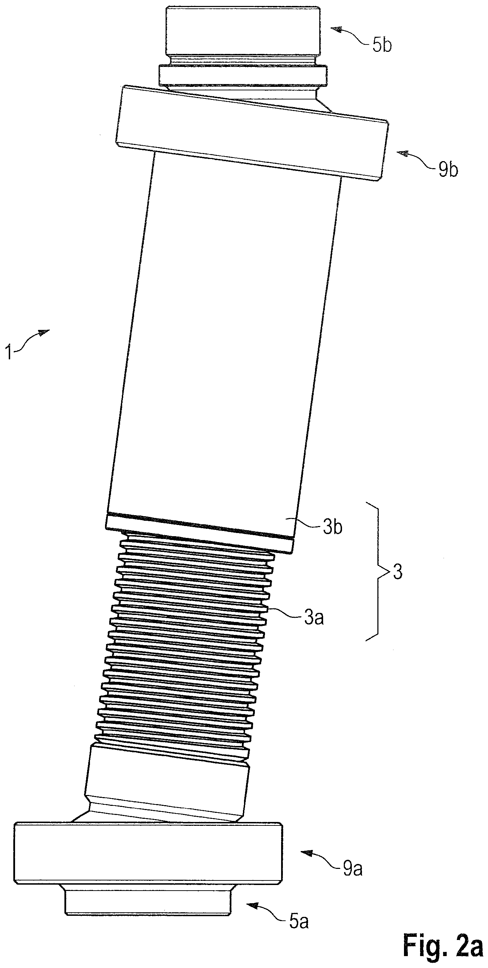

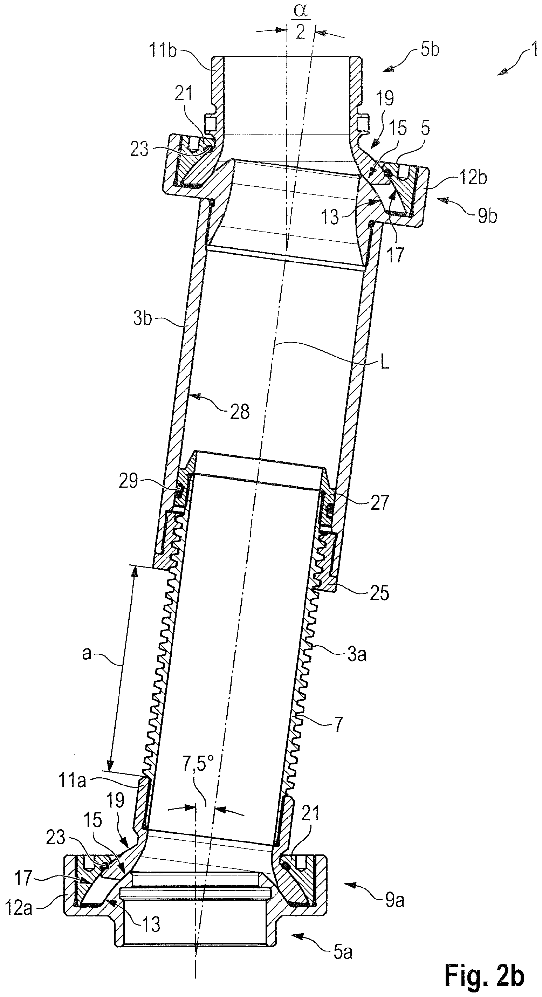

In Figur 2a und b ist zunächst ein erstes bevorzugtes Ausführungsbeispiel des Adapters 1 dargestellt. Der Adapter 1 weist ein erstes und zweites Kalottenlager 9a,b auf, mittels welchem jeweils der Anschluss 5a,b mit dem Rohrverbinder 3 gekoppelt ist. Das Kalottenlager 9a,b dient zur gelenkigen Verbindung derart, dass die Rohranschlüsse 5a,b eine geführte sphärische Bewegung vollführen können, also eine Bewegung entlang einer virtuellen Kugeloberfläche. Die Kalottengelenke 9a,b weisen jeweils ein Gehäuse 11a,b auf. Bei dem ersten Kalottengelenk 9a ist der erste Anschluss 5a des Rohrverbinders 3 an dem Gehäuse 12a des ersten Kalottengelenks 9a ausgebildet. Das erste Kalottengelenk 9a weist ferner ein Wankstück 11a auf, welches mit dem ersten Rohr 3a des Rohrverbinders 3 verbunden ist.

Das zweite Kalottengelenk 9b weist ein Gehäuse 12b auf, welches mit dem zweiten Rohr 3b des Rohrverbinders 3 verbunden ist, und ein Wankstück 11b, welches den zweiten Anschluss des Adapters 1 aufweist. Das Gehäuse 12a,b weist jeweils eine erste Gleitfläche 13 und eine dritte Gleitfläche 17 auf, wobei die zweite Gleitfläche 17 an einem Einsatz 21 ausgebildet ist, der in das Gehäuse eingesetzt wird. Das Wankstück 11a,b weist jeweils eine zweite und vierte Gleitfläche 15, 19 auf, die mit der jeweils zugeordneten ersten und dritten Gleitfläche 13, 17 in Anlage steht, wodurch das Wankstück sphärisch beweglich geführt relativ zum Rohrverbinder 3 ist. Das Wankstück 11a,b kann jeweils innerhalb eines Öffnungskegels α rollend/wankend, gierend und neigend bewegt werden, wobei die Neutralstellung definiert ist als diejenige, in welcher die Anschlüsse 5a,b in Richtung der Längsachse L des Rohrverbinders 3 ausgerichtet sind.

Zwischen wenigstens einer der Gleitflächenpaarungen 13/15 und 17/19 ist ein Dichtelement 23 vorgesehen, welches den Rohrverbinder 3 bzw. den Adapter 1 gegen Fluidaustritt abdichtet. In der gezeigten Ausführungsform gemäß Figur 2b ist das Dichtelement 23 zwischen den Gleitflächen 17 und 19 ausgebildet.

Das erste Rohr 3a des Rohrverbinders 3 weist ein Außengewinde 7 in Form eines Trapezgewindes auf. Mit diesem in Eingriff stehend befindet sich ein Innengewinde, welches an dem zweiten Rohr 3b des Rohrverbinders 3 ausgebildet ist. Somit ist der Rohrverbinder längenveränderlich. Im vorliegenden Fall ist das Innengewinde an einem Gewindeeinsatz 25 ausgebildet, welcher, beispielsweise mittels Verschrauben, in das zweite Rohr 3b eingesetzt ist. Das erste Rohr 3a ist als innenliegendes Rohr des Rohrverbinders 3 definiert, während das zweite Rohr 3b als außenliegendes Rohr definiert ist. An dem innenliegenden Rohr 3a ist ein Gleitabschnitt ausgebildet, der in Form einer stirnseitig auf das Rohr 3a montierten Gleithülse 27 ausgebildet ist. Zwischen dem Gleitabschnitt 27, der im Wesentlichen spielfrei gleitbeweglich an einer Innenwandung 28 des zweiten Rohrs 3b anliegt, und der Innenwandung 28 ist ein Dichtelement 29 zum Abdichten gegen Fluidaustritt vorgesehen.

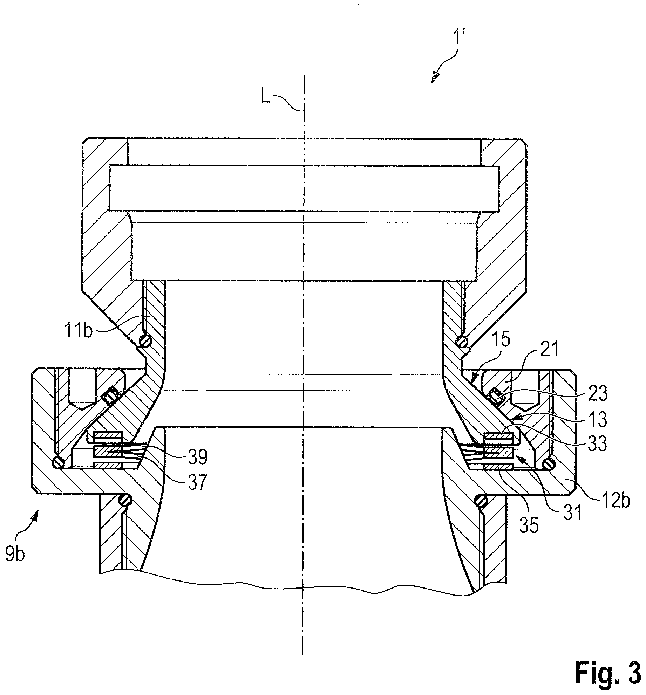

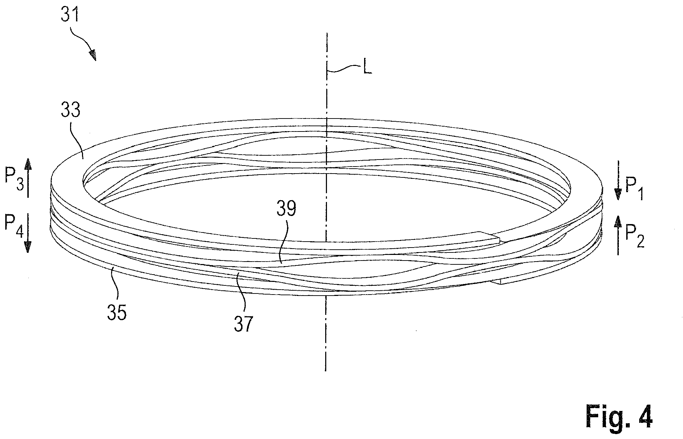

Aufgrund der doppelten Gleitflächenpaarung 13/15 und 17/19 ist das Kalottengelenk 9a,b gemäß Figur 2a,b ausschließlich einer sphärischen Bewegung ausgesetzt, weist also keine Translationskomponente auf. Der Adapter 1' gemäß Figur 3 unterscheidet sich hiervon geringfügig. Er basiert zwar auf dem gleichen Funktionsprinzip der Kalottenlagerung, weist aber lediglich eine Gleitflächenpaarung bestehend aus einer ersten Gleitfläche 13 an dem Einsatz 21 und einer zweiten Gleitfläche 15 an dem Wankstück 11b. Ein Dichtelement 23 dichtet diesen beiden Gleitflächen 13, 15 gegen Fluidaustritt ab. Die Ausführungsform gemäß Figur 3 unterscheidet sich von derjenigen gemäß Figur 2b ferner dadurch, dass zwischen dem Gehäuse 12 (b) und dem Wankstück 11 (b) ein Vorspannelement 31 in Form einer Wellenfeder angeordnet ist, vgl. auch Figur 4. Das Vorspannelement 31 wirkt dahingehend, dass das Wankstück 11b gegen den Einsatz 21 gedrückt wird. Ferner wirkt das Vorspannelement 31 vorzugsweise dahingehend, dass das Wankstück 11b in einer auf die Längsachse L ausgerichtete Neutralposition zurückgestellt wird, sobald es in eine Richtung aus dieser Neutralstellung ausgelenkt wurde. Bewirkt wird dies, indem das Vorspannelement 31 einen ersten und zweiten Stirnring 33, 35 aufweist, die mittels mehrerer umlaufender wellenförmiger ringförmiger Federelemente 37, 39 zwischenverbunden sind. Wird das Wankstück 11b zu einer Richtung aus der Längsachse L ausgelenkt, wird das Vorspannelement 31 in Richtung der Auslenkung gestaucht, kann aber zugleich in auf der diametral gegenüberliegenden Seite expandieren, so dass das Wankstück 11b steht eine definierte Position in Anlage an der Gleitfläche 13 des Einsatzes 21 beibehält. Optional könnten zusätzlich zwei weitere Gleitflächen an den gegenüberliegenden Flächen des Wankstücks 11b und Gehäuses 12b vorgesehen sein.

In Fig. 4 ist exemplarisch angedeutet, dass bei einer Kompression des Vorspannelements 31 auf einer ersten Seite in Richtung der Pfeile P₁ und P₂ aufgrund der Wellengeometrie der Federelemente 37, 39 auf einer zu der ersten Seite gegenüberliegenden zweiten Seite eine Expansion des Vorspannelements 31 in Richtung der Pfeile P₃, P₄ bewirkt wird, welche dazu führt, dass in Montagezustand gemäß Fig. 3 stets eine Vorspannkraft auf die Flächen 13, 15 ausgeübt wird, unabhängig vom Stellungswinkel zwischen Wankstück und Gehäuse.

Gezeigt ist in Figur 3 nur eines der beiden Enden des Adapter 1', wobei dies so zu verstehend ist, dass das andere Ende des Adapters 1' analog zu Figur 2b auch mit einem Vorspannelement und in derselben Anordnung wie Figur 2b es zeigt, ausgestaltet sein kann im Sinne der Erfindung.

### Bezugszeichenliste:

- 1, 1': Adapter
- 3: Rohrverbinder
- 3a,b: Verbindungsrohr
- 5a,b: Anschluss des Adapters
- 7: Außen-Gewinde
- 9a,b: Kalottengelenk
- 11a,b: Wankstück
- 12a,b: Gehäuse
- 13: erste Gleitfläche
- 15: zweite Gleitfläche
- 17: dritte Gleitfläche
- 19: vierte Gleitfläche
- 21: Einsatz
- 23: Dichtelement (Kalottengelenk)
- 25: Gewindeeinsatz
- 27: Gleitabschnitt
- 28: Innenwandung
- 29: Dichtelement (Rohrverbinder)
- 31: Vorspannelement
- 33,35: Stirnring
- 37,39: Federelement
- 100: Feuerlöschanlage
- 101: Rohrleitung
- 103: Rohrleitungsanschluss
- 105: Feuerlöschbehälter
- 107: Anschluss des Feuerlöschbehälters

- α: Öffnungswinkel
- L: Längsachse des Rohrverbinders
- P₁-P₄: Pfeile

## Patentansprüche

1. Adapter (1) zum fluidleitenden Verbinden eines Löschmittelbehälters (105) mit einem Rohrleitungsanschluss (103) einer Feuerlöschanlage (100), mit
- einem ersten Anschluss (5a), der dazu eingerichtet ist, an einen korrespondierend ausgebildeten Anschluss (107) des Löschmittelbehälters (105) angeschlossen zu werden, und
- einem zweiten Anschluss (5b), der dazu eingerichtet ist, an einen korrespondierenden Rohrleitungsanschluss (103) angeschlossen zu werden,
**dadurch gekennzeichnet, dass**
der erste und/oder zweite Anschluss (5a,b) jeweils mittels eines Kalottengelenks (9a,b) mit einem Rohrverbinder (3) gekoppelt sind,
wobei das Kalottengelenk (9a,b) ein Gehäuse (12a,b) mit einer ersten Gleitfläche (13) aufweist, und ein Wankstück (11a,b) mit einer zweiten Gleitfläche (15), wobei die ersten und zweiten Gleitflächen aneinander abgleiten und derart geformt sind, dass das Wankstück in dem Gehäuse sphärisch beweglich geführt ist,
wobei das Kalottengelenk (9a,b) ein Vorspannelement (31) aufweist, welches mit dem Wankstück (11a,b) einerseits und dem Gehäuse (12a,b) andererseits gekoppelt ist, und derart in Richtung der ersten und zweiten Gleitflächen (13, 15) vorgespannt ist, dass die ersten und zweiten Gleitflächen fluiddicht aneinander gedrückt werden.

2. Adapter (1) nach Anspruch 1,
wobei der Rohrverbinder (3) ein erstes Verbindungsrohr (3a) und ein zweites Verbindungsrohr (3b) aufweist, die zueinander in Richtung der Längsachse (L) bewegbar sind.

3. Adapter (1) nach Anspruch 2,
wobei das erste und zweite Verbindungsrohr (3a,b) miteinander verschraubt sind, vorzugsweise mittels eines Trapezgewindes(7).

4. Adapter (1) nach einem der vorstehenden Ansprüche,
wobei der Rohrverbinder (3) über einen Längenbereich von 20mm oder mehr, vorzugsweise 50mm oder mehr, besonders bevorzugt in einem Bereich von 55 mm bis 105 mm, in Richtung der Längsachse (L) längenveränderlich ist.

5. Adapter nach einem der vorstehenden Ansprüche ,
wobei das Kalottengelenk (9a,b) einen durchgehenden Strömungskanal zum Durchleiten von Fluid aufweist.

6. Adapter nach einem der vorstehenden Ansprüche,
wobei mindestens eine der ersten und zweiten Gleitflächen (13, 15) teilkugelförmig ausgebildet ist.

7. Adapter nach einem der vorstehenden Ansprüche,
wobei das Kalottengelenk (9a,b), vorzugsweise an einem Einsatz (21), eine dritte Gleitfläche (17) aufweist, die gegenüber der ersten Gleitfläche angeordnet ist, und das Wankstück eine vierte Gleitfläche (19) aufweist, die gegenüber der dritten Gleitfläche angeordnet ist, wobei die dritten und vierten Gleitflächen aneinander abgleiten, und vorzugsweise derart geformt sind, dass das Wankstück in dem Gehäuse sphärisch beweglich geführt ist, wobei weiter vorzugsweise mindestens eine der dritten und vierten Gleitflächen teilkugelförmig ausgebildet ist.

8. Adapter (1) nach einem der vorstehenden Ansprüche,
wobei das Kalottengelenk (9a,b) einen Verstellkegel mit einem Öffnungswinkel (α) von 5° oder mehr aufweist, vorzugsweise in einem Bereich von 5° bis 20°.

9. Adapter nach nach einem der vorstehenden Ansprüche,
wobei eines der beiden Rohre ein innenliegendes Rohr, und das andere der beiden Rohre ein außenliegendes Rohr ist, und wobei das innenliegende Rohr einen, vorzugsweise stirnseitig angeordneten, Gleitabschnitt (7) aufweist, der gleitbeweglich an einer Innenwandung (28) des außenliegenden Rohres anliegt.

10. Adapter nach Anspruch 9, wobei zwischen dem innenliegenden Rohr und dem außenliegenden Rohr, vorzugsweise an dem Gleitabschnitt, ein Dichtelement (29) zum Abdichten des Rohrverbinders (3) gegen Fluidaustritt angeordnet ist.

11. Feuerlöschanlage (100), mit
einem Löschmittelbehälter (105) mit einem Anschluss (107), und
einem Rohrleitungsanschluss (103), wobei der Anschluss (107) des Löschmittelbehälters (105) und der Rohrleitungsanschluss (103) voneinander beabstandet sind,
**dadurch gekennzeichnet, dass** ein Adapter (1) vorgesehen ist, der den Löschmittelbehälter (105) mit dem Rohrleitungsanschluss (103) fluidleitend verbindet, wobei der Adapter (1) nach einem der Ansprüche 1 bis 10 ausgebildet ist.

12. Verwendung eines Adapters (1) zum fluidleitenden Verbinden eines Löschmittelbehälters (105) mit einem Rohrleitungsanschluss (103) einer Feuerlöschanlage (100), wobei der Adapter (1) nach einem der Ansprüche 1 bis 10 ausgebildet ist.

## Claims

1. An adapter (1) for connecting an extinguishing-agent container (105) to a pipeline connection (103) of a fire-extinguishing system (100) in a fluid-conducting manner, having
- a first connector (5a), which is configured to be connected to a correspondingly configured connection (107) of the extinguishing-agent container (105), and
- a second connector (5b), which is configured to be connected to a corresponding pipeline connection (103),
**characterized in that** the first and/or second connectors (5a,b) are each coupled to a pipe coupling (3) by means of a spherical-cap joint (9a,b),
wherein the spherical-cap joint (9a,b) has a housing (12a,b) with a first sliding surface (13), and a rocking piece (11a,b) with a second sliding surface (15), wherein the first and second sliding surfaces slide against one another and are shaped such that the rocking piece is guided in a spherically movable manner in the housing,
wherein the spherical-cap joint (9a,b) has a pretensioning element (31), which is coupled to the rocking piece (11a,b) on one side and the housing (12a,b) on the other side, and is pretensioned in the direction of the first and second sliding surfaces (13, 15) such that the first and second sliding surfaces are pressed together in a fluidtight manner.

2. The adapter (1) as claimed in claim 1,
wherein the pipe coupling (3) has a first connecting pipe (3a) and a second connecting pipe (3b), which are movable relative to one another in the direction of the longitudinal axis (L).

3. The adapter as claimed in claim 2,
wherein the first and second connecting pipes (3a,b) are screwed together, preferably by means of a trapezoidal thread (7).

4. The adapter (1) as claimed in any one of the preceding claims,
wherein the pipe coupling (3) is variable in length in the direction of the longitudinal axis (L) over a length range of 20 mm or more, preferably 50 mm or more, particularly preferably in a range from 55 mm to 105 mm.

5. The adapter (1) as claimed in any one of the preceding claims,
wherein the spherical-cap joint (9a,b) has a continuous flow duct for the passage of fluid.

6. The adapter (1) as claimed in any one of the preceding claims,
wherein at least one of the first and second sliding surfaces (13, 15) is partially spherical.

7. The adapter (1) as claimed in any one of the preceding claims,
wherein the spherical-cap joint (9a,b) has, preferably on an insert (21), a third sliding surface (17) which is arranged opposite the first sliding surface, and the rocking piece has a fourth sliding surface (19) which is arranged opposite the third sliding surface, wherein the third and fourth sliding surfaces slide against one another, and are preferably shaped such that the rocking piece is guided in a spherically movable manner in the housing, wherein further preferably, at least one of the third and fourth sliding surfaces is partially spherical.

8. The adapter (1) as claimed in any one of the preceding claims,
wherein the spherical-cap joint (9a,b) has an adjusting cone with an opening angle (α) of 5° or more, preferably in a range from 5° to 20°.

9. The adapter (1) as claimed in any one of the preceding claims,
wherein one of the two pipes is an internal pipe, and the other of the two pipes is an external pipe, and wherein the internal pipe has a sliding portion (7) that is preferably arranged on the front side, and which slidably rests against an inner wall (28) of the external pipe.

10. The adapter as claimed in claim 9, wherein a sealing element (29) for sealing off the pipe coupling (3) against fluid egress is arranged between the internal pipe and the external pipe, preferably at the sliding portion.

11. A fire-extinguishing system (100) having
an extinguishing-agent container (105) with a connection (107), and
a pipeline connection (103), wherein the connection (107) of the extinguishing-agent container (105) and the pipeline connection (103) are spaced apart from one another,
**characterized in that** an adapter (1) is provided which connects the extinguishing-agent container (105) to the pipeline connection (103) in a fluid-conducting manner, wherein the adapter (1) is configured as claimed in any one of claims 1 to 10.

12. The use of an adapter (1) for connecting an extinguishing-agent container (105) to a pipeline connection (103) of a fire-extinguishing system (100) in a fluid-conducting manner, wherein the adapter (1) is configured as claimed in any one of claims 1 to 10.

## Revendications

1. Adaptateur (1) pour la liaison fluidique d'un réservoir d'agent extincteur (105) à un raccord de conduite (103) d'un système d'extinction d'incendie (100), avec
- un premier raccord (5a), qui est configuré pour être raccordé à un raccord (107) réalisé de manière correspondante du réservoir d'agent extincteur (105), et
- un deuxième raccord (5b), qui est configuré pour être raccordé à un raccord de conduite (103) correspondant,
**caractérisé en ce que** le premier et/ou deuxième raccord (5a,b) sont chacun couplés à un connecteur de tube (3) au moyen d'une articulation sphérique (9a,b),
dans lequel l'articulation sphérique (9a,b) présente un boîtier (12a,b) avec une première surface de glissement (13), et une pièce vacillante (11a,b) avec une deuxième surface de glissement (15), dans lequel les première et deuxième surfaces de glissement glissent l'une contre l'autre et sont formées de sorte que la pièce vacillante soit guidée de manière mobile et sphérique dans le boîtier, dans lequel l'articulation sphérique (9a,b) présente un élément de précontrainte (31), lequel est couplé à la pièce vacillante (11a,b) d'une part et au boîtier (12a,b) d'autre part, et est précontraint dans la direction des première et deuxième surfaces de glissement (13,15), de sorte que les première et deuxième surfaces de glissement soient comprimées l'une contre l'autre de manière étanche aux fluides.

2. Adaptateur (1) selon la revendication 1,
dans lequel le connecteur de tube (3) présente un premier tube de liaison (3a) et un deuxième tube de liaison (3b), qui sont mobiles l'un par rapport à l'autre dans la direction de l'axe longitudinal (L).

3. Adaptateur (1) selon la revendication 2,
dans lequel le premier et deuxième tube de liaison (3a,b) sont vissés ensemble, de préférence au moyen d'un filetage trapézoïdal (7).

4. Adaptateur (1) selon l'une quelconque des revendications précédentes,
dans lequel le connecteur de tube (3) est variable en longueur sur une plage de longueur de 20 mm ou plus, de préférence de 50 mm ou plus, de manière particulièrement préférée dans une plage de 55 mm à 105 mm, dans la direction de l'axe longitudinal (L).

5. Adaptateur selon l'une quelconque des revendications précédentes,
dans lequel l'articulation sphérique (9a,b) présente un canal d'écoulement continu pour le passage de fluide.

6. Adaptateur selon l'une quelconque des revendications précédentes,
dans lequel au moins l'une des première et deuxième surfaces de glissement (13, 15) est réalisée de manière partiellement sphérique.

7. Adaptateur selon l'une quelconque des revendications précédentes,
dans lequel l'articulation sphérique (9a,b), de préférence sur un insert (21), présente une troisième surface de glissement (17), qui est disposée en regard de la première surface de glissement, et la pièce vacillante présente une quatrième surface de glissement (19), qui est disposée en regard de la troisième surface de glissement, dans lequel les troisième et quatrième surfaces de glissement glissent l'une contre l'autre, et sont de préférence formées de telle sorte que la pièce vacillante est guidée de manière mobile et sphérique dans le boîtier, dans lequel plus préférablement au moins une des troisième et quatrième surfaces de glissement est réalisée de manière partiellement sphérique.

8. Adaptateur (1) selon l'une quelconque des revendications précédentes,
dans lequel l'articulation sphérique (9a,b) présente un cône de réglage avec un angle d'ouverture (α) de 5° ou plus, de préférence dans une plage de 5° à 20°.

9. Adaptateur selon l'une quelconque des revendications précédentes,
dans lequel l'un des deux tubes est un tube intérieur, et l'autre des deux tubes est un tube extérieur, et dans lequel le tube intérieur présente une section de glissement (7), de préférence disposée frontalement, qui s'applique de manière coulissante sur une paroi intérieure (28) du tube extérieur.

10. Adaptateur selon la revendication 9, dans lequel un élément d'étanchéité (29) est disposé entre le tube intérieur et le tube extérieur, de préférence sur la section de glissement, pour assurer l'étanchéité du connecteur de tube (3) par rapport à des fuites de fluide.

11. Système d'extinction d'incendie (100), avec
un réservoir d'agent extincteur (105) avec un raccord (107), et un raccord de conduite (103), dans lequel le raccord (107) du réservoir d'agent extincteur (105) et le raccord de conduite (103) sont espacés l'un de l'autre, **caractérisé en ce qu'**un adaptateur (1) est prévu, qui relie le réservoir d'agent extincteur (105) au raccord de conduite (103) de manière fluidique, dans lequel l'adaptateur (1) est réalisé selon l'une quelconque des revendications 1 à 10.

12. Utilisation d'un adaptateur (1) pour relier fluidiquement un réservoir d'agent extincteur (105) à un raccord de conduite (103) d'un système d'extinction d'incendie (100), dans lequel l'adaptateur (1) est réalisé selon l'une quelconque des revendications 1 à 10.
